# EUROPEAN PATENT SPECIFICATION

(11) **EP 4 044 316 B1**
(45) Date of publication and mention of the grant of the patent: **15.10.2025**
(21) Application number: 21803405.6
(22) Date of filing: 12.05.2021
(51) Int. Cl.: H01M 10/0569, H01M 10/0568, H01M 10/0567, H01M 10/052, H01M 10/44

(54) **ELECTROLYTE FOR LITHIUM SECONDARY BATTERY AND LITHIUM SECONDARY BATTERY COMPRISING SAME**
ELEKTROLYT FÜR LITHIUMSEKUNDÄRBATTERIE UND LITHIUMSEKUNDÄRBATTERIE DAMIT
ÉLECTROLYTE POUR BATTERIE SECONDAIRE AU LITHIUM ET BATTERIE SECONDAIRE AU LITHIUM LE COMPRENANT

(30) Priority: 12.05.2020 KR 20200056272
(43) Date of publication of application: 17.08.2022
(73) Proprietor: LG ENERGY SOLUTION, LTD., Seoul 07335 (KR)
(72) Inventor: LEE, Jaegil, Daejeon 34122 (KR); HAN, Suenghoon, Daejeon 34122 (KR); PARK, Seonghyo, Daejeon 34122 (KR); KIM, Eui Tae, Daejeon 34122 (KR); SONG, Myeongjun, Daejeon 34122 (KR); HONG, Kyungsik, Daejeon 34122 (KR); KIM, Minsu, Daejeon 34122 (KR)
(74) Representative: Hoffmann Eitle
(86) International application number: PCT/KR2021/005969
(87) International publication number: WO 2021/230661

(56) References cited:
- JP-B2- 6 424 436
- KR-A- 20170 084 452
- KR-A- 20180 066 169
- KR-B1- 101 925 051
- KR-B1- 101 940 152
- US-A1- 2019 051 940

## Description

### [Technical Field]

The present application claims the benefits of priorities based on Korean Patent Application No. 10-2020-0056272 filed on May 12, 2020 and Korean Patent Application No. 10-2021-0061119 filed on May 12, 2021.

The present invention relates to an electrolyte solution for a lithium secondary battery and a lithium secondary battery including the same, more particularly, to an electrolyte solution for a lithium secondary battery, which is capable of not only operating at a low temperature by lowering resistance, but also securing the stable lifetime characteristics of the battery and increasing the discharging capacity at a low temperature, and a lithium secondary battery including the same.

### [Background Art]

As interest in energy storage technology is increased, while its application is extended to the energy of mobile phones, tablets, laptops, and camcorders, and further to electric vehicles (EVs) and hybrid electric vehicles (HEVs), research and development of electrochemical devices are gradually increasing. Electrochemical devices are the field that is receiving the most attention in this respect, and among them, the development of secondary batteries such as a lithium-sulfur battery capable of charging and discharging has been a focus of interest. In recent years, in order to improve the capacity density and specific energy in developing such a battery, research and development on the design of new electrodes and batteries has been conducted.

Among such electrochemical devices, a lithium-sulfur battery (Li-S battery) has a high energy density (theoretical capacity) and thus is in the spotlight as a next-generation secondary battery that can replace the lithium ion-battery. In such a lithium-sulfur battery, the reduction reaction of sulfur and the oxidation reaction of lithium metal take place during discharging, and at this time, sulfur forms lithium polysulfide (LiPS) having a linear structure from S₈ having a cyclic structure. This lithium-sulfur battery is characterized by showing a stepwise discharging voltage until the polysulfide is completely reduced to Li₂S.

However, the biggest obstacle in the commercialization of the lithium-sulfur battery is lifetime, and during the charging/discharging process, the charging/discharging efficiency is reduced and the lifetime of the battery is deteriorated. The causes of such deterioration of the lifetime of the lithium-sulfur battery are various, such as the side reactions of the electrolyte solution (deposition of by-products due to the decomposition of the electrolyte solution), the instability of lithium metal (dendrite grows on the lithium negative electrode, causing a short circuit), and the deposition of positive electrode by-products (leaching of lithium polysulfide from the positive electrode).

That is, in a battery using a sulfur-based compound as a positive electrode active material and using an alkali metal such as lithium as a negative electrode active material, the leaching and shuttle phenomenon of lithium polysulfide occurs during charging/discharging, and the lithium polysulfide is transferred to the negative electrode, thereby reducing the capacity of the lithium-sulfur battery, and thus the lithium-sulfur battery has a major problem in that its lifetime is reduced and its reactivity is reduced. That is, since polysulfide leached from the positive electrode has high solubility in the organic electrolyte solution, it can undesirably move toward the negative electrode (PS shuttling) through the electrolyte solution. As a result, a decrease in capacity occurs due to irreversible loss of the positive electrode active material, and a decrease in the lifetime of the battery occurs due to deposition of sulfur particles on the surface of the lithium metal by side reactions.

Meanwhile, the behavior of such a lithium-sulfur battery can vary greatly depending on the electrolyte solution. The electrolyte solution when sulfur in the positive electrode is leached into the electrolyte solution in the form of lithium polysulfide (LiPS) is called Catholyte and the electrolyte solution when sulfur hardly leaches out in the form of lithium polysulfide is called sparingly soluble or solvating electrolyte (SSE). That is, in the art, various studies on a lithium-sulfur battery in which sulfur, a positive electrode active material, does not elute into the electrolyte solution (studies such as adding LiPS adsorption material to positive electrode composites or modifying separators made of existing PE, etc.) are being conducted, and in particular, studies on an electrolyte solution capable of proceeding a solid-to-solid reaction in which sulfur is converted to Li₂S, the final discharging product, are also being conducted, but it has not yet achieved such results. Accordingly, there is a need for a more fundamental method to suppress phenomenon that lithium polysulfide moves to the negative electrode and thus decreases the lifetime of the lithium-sulfur battery and that the reactivity decreases due to a large amount of lithium polysulfide.

In particular, the lithium-sulfur battery shows a rapid increase in cell resistance at temperatures below 25 °C, making it difficult to use, and its performance under a low temperature tends to be largely influenced by the electrolyte solution contained in the battery. In this regard, the electrolyte solution that can be operated at a low temperature generally has a low resistance, but there is a problem that the stability and lifetime characteristics in a lithium negative electrode are deteriorated. Accordingly, there is a need to develop an electrolyte solution for a lithium secondary battery (specifically, a lithium-sulfur battery) capable of operating at a low temperature and securing the stable lifetime characteristics, and a lithium secondary battery comprising the same.

### [Disclosure]

### [Technical Problem]

Therefore, it is an object of the present invention to provide an electrolyte solution for a lithium secondary battery and a lithium secondary battery comprising the same, which is capable of not only operating at a low temperature by lowering resistance, but also securing the stable lifetime characteristics of the battery and increasing the discharging capacity at a low temperature.

### [Technical Solution]

In order to achieve the above object, the present invention provides an electrolyte solution for a lithium secondary battery, which comprises a first solvent comprising a glyme-based compound; a second solvent comprising a conjugated heterocyclic compound; a third solvent comprising a non-conjugated cyclic ether-based compound; and lithium salt.

In addition, the present invention provides a lithium secondary battery comprising a positive electrode; a negative electrode; a separator interposed between the positive electrode and the negative electrode; and the electrolyte solution for the lithium secondary battery.

### [Advantageous Effects]

According to the electrolyte solution for a lithium secondary battery and a lithium secondary battery comprising the same according to the present invention, it is possible not only to operate at a low temperature by lowering resistance, but also to secure the stable lifetime characteristics of the battery and also to increase the discharging capacity at a low temperature.

### [Description of Drawings]

FIGs. 1 and 2 are graphs showing discharging capacities of lithium secondary batteries manufactured according to an embodiment of the present invention and a comparative example.
FIG. 3 is a graph showing lifetime characteristics of lithium secondary batteries manufactured according to an embodiment of the present invention and a comparative example.

### [Best Mode]

Hereinafter, the present invention will be described in detail.

The electrolyte solution for the lithium secondary battery according to the present invention comprises A) a first solvent comprising a glyme-based compound, B) a second solvent comprising a conjugated heterocyclic compound, C) a third solvent comprising a non-conjugated cyclic ether-based compound, and D) lithium salt.

In general, lithium secondary batteries (especially lithium-sulfur batteries) show a rapid increase in cell resistance at temperatures below 25 °C, making it difficult to use, and their performance at a low temperature tends to be largely influenced by the electrolyte solution contained in the battery. In this regard, the electrolyte solution capable of operating at a low temperature generally has a small resistance, but there is a problem that the stability and lifetime characteristics in a lithium negative electrode are deteriorated. Accordingly, the present applicant has developed an electrolyte solution for a lithium secondary battery capable of operating at a low temperature, securing the stable lifetime characteristics, and increasing the discharging capacity at a low temperature, and a lithium secondary battery comprising the same. Meanwhile, the electrolyte solution of the present invention may be for a lithium-sulfur battery.

Hereinafter, each of A) the first solvent comprising the glyme-based compound, B) the second solvent comprising the conjugated heterocyclic compound, C) the third solvent comprising the non-conjugated cyclic ether-based compound, and D) lithium salt comprised in the electrolyte solution for the lithium secondary battery of the present invention will be described in detail.

### A) First solvent

The first solvent comprising the glyme-based compound not only dissolves a lithium salt so that the electrolyte solution has lithium-ion conductivity, but also serves to facilitate electrochemical reaction with lithium by eluting sulfur which is a positive electrode active material.

Specific examples of the glyme-based compound may be, but are not limited to, at least one selected from the group consisting of dimethoxyethane, diethoxyethane, methoxyethoxyethane, diethyleneglycol dimethylether, diethyleneglycol diethylether, diethyleneglycol methyl ethyl ether, triethyleneglycol dimethylether, triethyleneglycol diethylether, triethyleneglycol methyl ethyl ether, tetraethyleneglycol dimethylether, tetraethyleneglycol diethylether, tetraethyleneglycol methyl ethyl ether, polyethyleneglycol dimethylether, polyethyleneglycol diethylether, and polyethyleneglycol methyl ethyl ether. Among these, it is preferable to use dimethoxyethane.

### B) Second solvent

The second solvent comprising the conjugated heterocyclic compound comprises a heterocyclic compound containing one or more double bonds and at the same time, containing any one of an oxygen atom and a sulfur atom, and can suppress the generation of lithium dendrites by forming a polymeric protective film (solid electrolyte interface, SEI layer) on the surface of a lithium-based metal (negative electrode) by a ring opening reaction of a heterocyclic compound in the initial discharging stage of the battery, and can further improve the lifetime characteristics of the lithium-sulfur battery by reducing the decomposition of the electrolyte solution on the surface of lithium-based metal and subsequent side reactions. In addition, the second solvent is difficult to dissolve the salt due to the delocalization of the lone pair electrons of the hetero atom (oxygen atom or sulfur atom), so it serves to reduce the leaching amount of polysulfide into the electrolyte solution.

That is, the conjugated heterocyclic compound contained in the second solvent of the present invention must contain two or more double bonds in order to form a polymeric protective film on the surface of a lithium-based metal, and must also contain a hetero atom (oxygen atom or sulfur atom) to exhibit an effect such as increasing the affinity with other solvents in the electrolyte solution by making it polar.

The conjugated heterocyclic compound may be a 4 to 15 membered, preferably 4 to 7 membered, and more preferably 5 to 6 membered heterocyclic compounds. In addition, the conjugated heterocyclic compound may be a heterocyclic compound substituted or unsubstituted by at least one selected from the group consisting of an alkyl group having 1 to 4 carbon atoms, a cyclic alkyl group having 3 to 8 carbon atoms, an aryl group having 6 to 10 carbon atoms, a halogen group, a nitro group (-NO₂), an amine group (-NH₂), and a sulfonyl group (-SO₂). In addition, the conjugated heterocyclic compound may be a multicyclic compound of a heterocyclic compound and at least one of a cyclic alkyl group having 3 to 8 carbon atoms and an aryl group having 6 to 10 carbon atoms.

When the conjugated heterocyclic compound is substituted with an alkyl group having 1 to 4 carbon atoms, it is preferable because radicals are stabilized and side reactions between electrolyte solutions can be suppressed. In addition, when substituted with a halogen group or a nitro group, it is preferable because a functional protective film can be formed on the surface of a lithium-based metal, and at this time, the formed functional protective film is a compacted protective film, and thus has an advantage of being stable, thereby enabling uniform deposition of the lithium-based metal and suppressing side reactions between the polysulfide and the lithium-based metal.

Such conjugated heterocyclic compound may comprise any one or more of a conjugated cyclic ether-based compound and a thiophene-based compound. In addition, according to one embodiment, the second solvent or the conjugated heterocyclic compound may comprise only a thiophene-based compound.

Examples of the conjugated cyclic ether-based compound may be furan-based compounds and pyran-based compounds, and more specifically, may be, but are not limited to, at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, and 2-(2-nitrovinyl)furan. Among these, 2-methylfuran may be most preferred. In addition, in an embodiment of the present invention, the second solvent may comprise a conjugated cyclic ether-based compound.

In addition, specific examples of the thiophene-based compound may be, but are not limited to, at least one selected from the group consisting of thiophene, 2-methylthiophene, 2-ethylthiophene, 2-propylthiophene, 2-butylthiophene, 2,3-dimethylthiophene, 2,4-dimethylthiophene, and 2,5-dimethylthiophene. Among these, 2-methylthiophene may be most preferred. In addition, in one embodiment of the present invention, the second solvent may comprise a thiophene-based compound.

### C) Third solvent

The third solvent comprising the non-conjugated cyclic ether-based compound is contained in the electrolyte solution and, similar to the first solvent, serves to dissolve lithium salts and sulfur active materials. However, compared to the first solvent in the form of glyme, the non-conjugated cyclic ether-based compound has a characteristic that the increase in the viscosity of the solution is moderated below 25 °C, thereby reducing the decrease in the ionic conductivity of the electrolyte solution. Specific examples of the non-conjugated cyclic ether-based compound may be, but are not limited to, at least one selected from the group consisting of tetrahydrofuran-based compounds such as tetrahydrofuran, 2-methyl tetrahydrofuran, 3-methyl tetrahydrofuran, 2,5-dimethyl tetrahydrofuran and 2-ethyl-5-methyl tetrahydrofuran, and dioxolane-based compound such as 1,3-dioxolane. Among these, 2-methyltetrahydrofuran may be most preferred.

When reviewing the contents of the first solvent, the second solvent, and the third solvent as described above, the content of the first solvent may be 45 to 75 vol.%, preferably 50 to 70 vol.%, the content of the second solvent may be 5 to 35 vol.%, preferably 10 to 30 vol.%, and the content of the third solvent may be 5 vol.% or more, preferably 5 to 45 vol.%, and more preferably 10 to 40 vol.%, relative to the total amount of the organic solvents comprising the first solvent, the second solvent, and the third solvent.

If the first solvent is contained in an amount of less than 45 vol.% relative to the total amount of the organic solvents, there is a concern that a problem that the lithium-ion conductivity decreases due to insufficient dissolution of the lithium salt and a problem that sulfur, an active material exceeds the soluble concentration and thus is precipitated may occur. In addition, if the first solvent exceeds 75 vol.% relative to the total amount of the organic solvents, as sulfur, an active material, is excessively eluted, the concentration of lithium polysulfide is increased, thereby causing a problem that the viscosity of the electrolyte solution increases severely at a low temperature. Above all, if the content is out of the above range, there may be a problem that the discharging capacity of the battery is decreased due to an increase in resistance at a low temperature. Meanwhile, in the present invention, the low temperature means a temperature of 15 °C or less.

In addition, if the second solvent is contained in an amount of less than 5 vol.% relative to the total amount of the organic solvents, there is a concern that the ability to reduce the leaching amount of polysulfide will be lowered, making it impossible to suppress the increase in the resistance of the electrolyte solution or that a problem that the protective film is not completely formed on the surface of the lithium-based metal may occur, and thus the lifetime performance of the battery may be deteriorated. If the second solvent exceeds 35 vol.% relative to the total amount of the organic solvents, the leaching of polysulfide is excessively prevented, so that the electrochemical reaction may not be proceeded normally, and thus, there may be a problem that the discharge capacity of the battery is decreased.

In addition, if the third solvent is contained in an amount of less than 5 vol.% relative to the total amount of the organic solvents, there may be difficulties in discharging the battery due to an increase in the viscosity of the electrolyte solution at a low temperature. Meanwhile, there is no upper limit on the content of the third solvent. That is, even if the third solvent is used in excess, there is no disadvantage. However, in this case, since the contents of the first and the second solvents are relatively reduced, it may be desirable to adjust the third solvent to an appropriate content in consideration of the advantages that can be obtained by the first and second solvents.

### D) Lithium salt

The lithium salt is an electrolyte salt used to increase ion conductivity, and may be used without limitation, as long as it is commonly used in the art. Specific examples of the lithium salt may be at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, LiFSI ((SO₂F)₂NLi), (CF₃SO₂)₃CLi, lithium nitrate (LiNO₃), lithium nitrite (LiNO₂), lithium chloroborane, lithium lower aliphatic carboxylate having 4 or less carbon atoms, lithium tetraphenyl borate and lithium imide. Among these, it is preferable to use LiFSI ((SO₂F)₂NLi) as an essential component and if necessary, it is more preferable to use along with lithium nitrate (LiNO₃). In addition, it may be preferable that the electrolyte solution of the present invention does not contain LiTFSI ((CF₃SO₂)₂NLi).

The concentration of the lithium salt may be determined in consideration of ion conductivity and the like, and may be, for example, 0.1 to 4 M, preferably 0.2 to 2 M, and more preferably 0.5 to 2 M. If the concentration of the lithium salt is less than 0.1 M, it may be difficult to secure ion conductivity suitable for operating a battery. If the concentration of the lithium salt exceeds 4 M, as the viscosity of the electrolyte solution is increased, the mobility of lithium ions is decreased, or the decomposition reaction of the lithium salt itself is increased, and thus the performance of the battery may be deteriorated.

### E) Other additive

Meanwhile, in order to further improve the lifetime of the battery, if necessary, the electrolyte solution for the lithium secondary battery according to the present invention may further comprise at least one additive selected from the group consisting of lanthanum nitrate (La(NO₃)₃), potassium nitrate (KNO₃), cesium nitrate (CsNO₃), magnesium nitrate (Mg(NO₃)₂), barium nitrate (Ba(NO₃)₂), potassium nitrite (KNO₂), and cesium nitrite (CsNO₂). In addition, the additive may be contained in an amount of 1 to 10% by weight, preferably 2 to 8% by weight, and more preferably 2.5 to 6% by weight, relative to the total weight of the electrolyte solution for the lithium secondary battery. If the content of the additive exceeds 10% by weight, the viscosity of the electrolyte solution may be increased, making it difficult to operate.

Next, the lithium secondary battery according to the present invention will be described. The lithium secondary battery comprises a positive electrode, a negative electrode, a separator interposed between the positive electrode and the negative electrode, and the electrolyte solution for the lithium secondary battery. The electrolyte solution for the lithium secondary battery comprises A) the first solvent comprising the glyme-based compound, B) the second solvent comprising the conjugated heterocyclic compound, C) the third solvent comprising the non-conjugated cyclic ether-based compound, and D) lithium salt, as described above, and detailed descriptions of these are as described above. In addition, the lithium secondary battery may be any lithium secondary battery commonly used in the art, and among them, the lithium-sulfur battery may be most preferred.

The lithium secondary battery, in particular, a lithium-sulfur battery as described above exhibits excellent discharging capacity even at a low temperature of 15 °C or less, specifically 10 °C or less. For example, the lithium-sulfur battery of the present invention exhibits a discharging capacity retention rate of 90 to 97% at a low temperature of 15 °C or less, and more specifically, if the lithium-sulfur battery of the present invention is charged and discharged at about 10 °C at 0.1 C, the discharging capacity in the third cycle is maintained at 85 to 95% as compared to the same condition at 25 °C.

Hereinafter, in the lithium secondary battery according to the present invention, the positive electrode, the negative electrode, and the separator will be described in more detail.

As described above, the positive electrode comprised in the lithium secondary battery of the present invention comprises a positive electrode active material, a binder, and an electrically conductive material. The positive electrode active material may be one that can be applied to a conventional lithium secondary battery, and for example may comprise elemental sulfur (S₈), a sulfur-based compound, or a mixture thereof. Specifically, the sulfur-based compound may be Li₂Sₙ(n≥1), an organosulfur compound, or a carbon-sulfur composite ((C₂Sₓ)ₙ: x=2.5 ~ 50, n≥2). In addition, the positive electrode active material may comprise a sulfur-carbon composite, and since the sulfur material alone does not have electrical conductivity, it may be used in combination with an electrically conductive material. The carbon material (or carbon source) constituting the sulfur-carbon composite may have a porous structure or a high specific surface area, and any carbon material may be used as long as it is commonly used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT), and multiwall carbon nanotubes (MWCNT); carbon fibers such as graphite nanofiber (GNF), carbon nanofiber (CNF), and activated carbon fiber (ACF); and activated carbon, and its shape may be spherical, rod-shaped, needle-shaped, plate-shaped, tubular or bulk-shaped, and it can be used without limitation as long as it is commonly used in a lithium secondary battery.

In addition, pores are formed in the carbon material, and the porosity of the pores is 40 to 90%, preferably 60 to 80%. If the porosity of the pores is less than 40%, since lithium ions are not delivered normally, it can act as a resistance component and cause problems. If the porosity of the pores exceeds 90%, a problem of lowering the mechanical strength may occur. In addition, the pore size of the carbon material is 10 nm to 5 µm, preferably 50 nm to 5 µm. If the pore size is less than 10 nm, there may be a problem that lithium ions cannot be transmitted. If the pore size exceeds 5 µm, a short circuit of the battery due to contact between electrodes and safety problems may occur.

The binder is a component that assists in the bonding between a positive electrode active material and an electrically conductive material and the bonding to a current collector, and for example, may be, but is not limited to, at least one selected from the group consisting of polyvinylidene fluoride (PVdF), polyvinylidenefluoride-polyhexafluoropropylene copolymer (PVdF/HFP), polyvinyl acetate, polyvinyl alcohol, polyvinyl ether, polyethylene, polyethylene oxide, alkylated polyethylene oxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrene-butadiene rubber, acrylonitrile-butadiene rubber, ethylenepropylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and mixtures thereof.

The binder is usually added in an amount of 1 to 50 parts by weight, preferably 3 to 15 parts by weight, based on 100 parts by weight of the total weight of the positive electrode. If the content of the binder is less than 1 part by weight, the adhesive strength between the positive electrode active material and the current collector may be insufficient. If the content of the binder is more than 50 parts by weight, the adhesive strength is improved but the content of the positive electrode active material may be reduced accordingly, thereby lowering the capacity of the battery.

The electrically conductive material comprised in the positive electrode is not particularly limited as long as it does not cause side reactions in the internal environment of the battery and has excellent electrical conductivity while not causing chemical changes in the battery. The electrically conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, and lamp black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; electrically conductive polymers such as polyphenylene derivatives; and a mixture of two or more thereof.

The electrically conductive material is typically added in an amount of 0.5 to 50 parts by weight, preferably 1 to 30 parts by weight based on 100 parts by weight of total weight of the positive electrode. If the content of electrically conductive material is too low, that is, if it is less than 0.5 parts by weight, it is difficult to obtain an effect on the improvement of the electrical conductivity, or the electrochemical characteristics of the battery may be deteriorated. If the content of the electrically conductive material exceeds 50 parts by weight, that is, if it is too much, the amount of positive electrode active material is relatively small and thus capacity and energy density may be lowered. The method of incorporating the electrically conductive material into the positive electrode is not particularly limited, and conventional methods known in the related art such as coating on the positive electrode active material can be used. Also, if necessary, the addition of the second coating layer with electrical conductivity to the positive electrode active material may replace the addition of the electrically conductive material as described above.

In addition, a filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode active material, the binder, the electrically conductive material and the like are dispersed and mixed in a dispersion medium (solvent) to form a slurry, and the slurry can be applied onto the positive electrode current collector, followed by drying and rolling it to prepare a positive electrode. The dispersion medium may be, but is not limited to, N-methyl-2-pyrrolidone (NMP), dimethyl formamide (DMF), dimethyl sulfoxide (DMSO), ethanol, isopropanol, water, or a mixture thereof.

The positive electrode current collector may be, but is not limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), or an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched form, porous body, foam or the like.

The negative electrode is a lithium-based metal, and may further include a current collector on one side of the lithium-based metal. The current collector may be a negative electrode current collector. The negative electrode current collector is not particularly limited as long as it has high electrical conductivity without causing chemical changes in the battery, and may be selected from the group consisting of copper, aluminum, stainless steel, zinc, titanium, silver, palladium, nickel, iron, chromium, and alloys and combinations thereof. The stainless steel can be surface-treated with carbon, nickel, titanium, or silver, and the alloy may be an aluminum-cadmium alloy. In addition, sintered carbon, and a non-conductive polymer surface-treated with an electrically conductive material or a conductive polymer may be used. In general, a thin copper foil is used as the negative electrode current collector.

In addition, the shape of the negative electrode current collector can be various forms such as a film having or not having fine irregularities on a surface, sheet, foil, net, porous body, foam, nonwoven fabric and the like. In addition, the negative electrode current collector is in the thickness range of 3 to 500 µm. If the thickness of the negative electrode current collector is less than 3 µm, the current collecting effect is lowered. On the other hand, if the thickness exceeds 500 µm, when folding and then assembling the cell, there is a problem that the workability is reduced.

The lithium-based metal may be lithium or a lithium alloy. In that case, the lithium alloy contains an element capable of alloying with lithium, and specifically the lithium alloy may be an alloy of lithium and at least one selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge, and Al. The lithium-based metal may be in the form of a sheet or foil, and in some cases, may be in a form in which lithium or a lithium alloy is deposited or coated on a current collector by a dry process, or may be in a form in which metal and an alloy in a particle phase are deposited or coated by a wet process or the like.

A conventional separator may be interposed between the positive electrode and the negative electrode. The separator is a physical separator having a function of physically separating the electrodes, and can be used without particular limitation as long as it is used as a conventional separator, and particularly, a separator with low resistance to ion migration in the electrolyte solution and excellent impregnating ability for the electrolyte solution is preferable. In addition, the separator enables the transport of lithium ions between the positive electrode and the negative electrode while separating or insulating the positive electrode and the negative electrode from each other. The separator may be made of a porous, nonconductive, or insulating material. The separator may be an independent member such as a film or a coating layer added to the positive electrode and/or the negative electrode.

Examples of the polyolefin-based porous film which can be used as the separator may be films formed of any polymer alone selected from polyethylenes such as high density polyethylene, linear low density polyethylene, low density polyethylene, and ultrahigh molecular weight polyethylene, and polyolefin-based polymers such as polypropylene, polybutylene, and polypentene, or formed of a polymer mixture thereof. Examples of the nonwoven fabric that can be used as the separator is a nonwoven fabric formed by a polymer of polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone, polyester and the like alone or a mixture thereof. Such nonwoven fabrics include a nonwoven fabric in the form of a fiber to form a porous web, that is, a spunbond or a meltblown nonwoven fabric composed of long fibers.

The thickness of the separator is not particularly limited, but is preferably in the range of 1 to 100 µm, more preferably 5 to 50µm. If the thickness of the separator is less than 1 µm, the mechanical properties cannot be maintained. If the thickness of the separator exceeds 100 µm, the separator acts as a resistive layer, thereby deteriorating the performance of the battery. The pore size and porosity of the separator are not particularly limited, but it is preferable that the pore size is 0.1 to 50 µm and the porosity is 10 to 95%. If the separator has a pore size of less than 0.1 µm or a porosity of less than 10%, the separator acts as a resistive layer. If the separator has a pore size of more than 50 µm or a porosity of more than 95%, mechanical properties cannot be maintained.

The lithium secondary battery of the present invention comprising the positive electrode, the negative electrode, separator, and the electrolyte solution as described above may be manufactured through a process of making the positive electrode face the negative electrode, and interposing a separator therebetween and then injecting the electrolyte solution for the lithium secondary battery according to the present invention.

Meanwhile, the lithium secondary battery according to the present invention can be not only applicable to a battery cell used as a power source of a small device, but also can be particularly suitably usable as a unit battery of a battery module which is a power source of a medium and large-sized device. In this respect, the present invention also provides a battery module in which at least two lithium secondary batteries are electrically connected (in series or in parallel). It is needless to say that the number of lithium secondary batteries comprised in the battery module may be variously adjusted in consideration of the use and capacity of the battery module. In addition, the present invention provides a battery pack in which the battery modules are electrically connected according to a conventional technique in the art. The battery module and the battery pack may be used as a power source for at least one medium and large-sized device selected from power tools; electric cars comprising an electric vehicle (EV), a hybrid electric vehicle (HEV), and a plug-in hybrid electric vehicle (PHEV); electric trucks; electric commercial vehicles; or power storage systems, but the present invention is not limited thereto.

### [Mode for Invention]

Hereinafter, preferred examples are provided to help understanding of the present invention, but the following examples are only for exemplifying the present invention, and it is apparent to those skilled in the art that various changes and modifications can be made within the scope of the present invention, and such changes and modifications are within the scope of the appended claims.

### [Example 1] Manufacture of lithium secondary battery

### Preparation of electrolyte solution

First, LiFSI was dissolved in the organic solvent, which was obtained by mixing dimethoxyethane (the first solvent), 2-methylfuran (the second solvent), and 2-methyltetrahydrofuran (the third solvent) in a volume ratio (v/v) of 5:1:4, to a concentration of 0.75 M, and then 3% by weight of lithium nitrate (LiNO₃) based on the total weight of the electrolyte solution were added to prepare an electrolyte solution for a lithium secondary battery.

### Manufacture of positive electrode

90 Parts by weight of sulfur-carbon (CNT) composite (S/C 70:30 weight ratio) as a positive electrode active material, 5 parts by weight of Denka Black as an electrically conductive material, and 5 parts by weight of styrene-butadiene rubber/carboxymethyl cellulose (SBR/CMC 7:3) as a binder were mixed to prepare a slurry composition for the positive electrode, and then the prepared slurry composition was coated on a current collector (Al Foil), dried at 50 °C for 12 hours, and pressed with a roll press device to prepare a positive electrode. At this time, the loading amount was 5 mAh/cm², and the porosity of the electrode was 65%.

### Manufacture of lithium secondary battery (lithium-sulfur battery)

The prepared positive electrode and the lithium metal negative electrode having a thickness of 150 µm were positioned to face each other, a polyethylene (PE) separator was interposed therebetween, and the prepared electrolyte solution was injected to manufacture a coin cell type lithium-sulfur battery. Meanwhile, in the manufacture of the battery, the positive electrode was punched out and used as a 14 phi circular electrode, polyethylene separator was punched out and used as a 19 phi separator, and lithium metal was punched out and used as a 16 phi negative electrode.

### [Example 2] Manufacture of lithium secondary battery

A lithium secondary battery was manufactured in the same manner as in Example 1, except that the volume ratio (v/v) of dimethoxyethane (the first solvent), 2-methylfuran (the second solvent), and 2-methyltetrahydrofuran (the third solvent) in the electrolyte solution was changed from 5:1:4 to 6:1:3.

### [Example 3] Manufacture of lithium secondary battery

A lithium secondary battery was manufactured in the same manner as in Example 1, except that the volume ratio (v/v) of dimethoxyethane (the first solvent), 2-methylfuran (the second solvent), and 2-methyltetrahydrofuran (the third solvent) in the electrolyte solution was changed from 5:1:4 to 7:1:2.

### [Example 4] Manufacture of lithium secondary battery

A lithium secondary battery was manufactured in the same manner as in Example 1, except that the volume ratio (v/v) of dimethoxyethane (the first solvent), 2-methylfuran (the second solvent), and 2-methyltetrahydrofuran (the third solvent) in the electrolyte solution was changed from 5:1:4 to 5:2:3.

### [Example 5] Manufacture of lithium secondary battery

A lithium secondary battery was manufactured in the same manner as in Example 1, except that the volume ratio (v/v) of dimethoxyethane (the first solvent), 2-methylfuran (the second solvent), and 2-methyltetrahydrofuran (the third solvent) in the electrolyte solution was changed from 5:1:4 to 7:2:1.

### [Example 6] Manufacture of lithium secondary battery

A lithium secondary battery was manufactured in the same manner as in Example 1, except that the volume ratio (v/v) of dimethoxyethane (the first solvent), 2-methylfuran (the second solvent), and 2-methyltetrahydrofuran (the third solvent) in the electrolyte solution was changed from 5:1:4 to 5:3:2.

### [Example 7] Manufacture of lithium secondary battery

A lithium secondary battery was manufactured in the same manner as in Example 2, except that the second solvent of the electrolyte solution was changed from 2-methylfuran to 2-methylthiophene.

### [Comparative Example 1] Manufacture of lithium secondary battery

A lithium secondary battery was manufactured in the same manner as in Example 1, except that the second solvent was not used, and only dimethoxyethane (the first solvent) and 2-methyltetrahydrofuran (the third solvent) were mixed in a volume ratio (v/v) of 7:3.

### [Comparative Example 2] Manufacture of lithium secondary battery

A lithium secondary battery was manufactured in the same manner as in Example 1, except that the third solvent was not used, and only dimethoxyethane (the first solvent) and 2-methylfuran (the second solvent) were mixed in a volume ratio (v/v) of 7:3.

### [Comparative Example 3] Manufacture of lithium secondary battery

A lithium secondary battery was manufactured in the same manner as in Example 1, except that the volume ratio (v/v) of dimethoxyethane (the first solvent), 2-methylfuran (the second solvent), and 2-methyltetrahydrofuran (the third solvent) in the electrolyte solution was changed from 5:1:4 to 8:1:1.

### [Comparative Example 4] Manufacture of lithium secondary battery

A lithium secondary battery was manufactured in the same manner as in Example 1, except that the volume ratio (v/v) of dimethoxyethane (the first solvent), 2-methylfuran (the second solvent), and 2-methyltetrahydrofuran (the third solvent) in the electrolyte solution was changed from 5:1:4 to 4:1:5.

### [Comparative Example 5] Manufacture of lithium secondary battery

A lithium secondary battery was manufactured in the same manner as in Example 1, except that the volume ratio (v/v) of dimethoxyethane (the first solvent), 2-methylfuran (the second solvent), and 2-methyltetrahydrofuran (the third solvent) in the electrolyte solution was changed from 5:1:4 to 5:4:1.

### [Comparative Example 6] Manufacture of lithium secondary battery

A lithium secondary battery was manufactured in the same manner as in Example 1, except that LiFSI in lithium salts of electrolyte solution was changed to LiTFSI.

The compositions of the electrolyte solutions prepared and used in Examples 1 to 7 and Comparative Examples 1 to 6 are shown in Table 1 below.

**Table 1:**

| | Electrolyte solution | | | | |
|---|---|---|---|---|---|
| | First solvent | Second solvent | Third solvent | Lithium salt | |
| Example 1 | dimethoxyethane 50 vol.% | 2-methylfuran 10 vol.% | 2-methyl tetrahydrofuran 40 vol.% | LiFSI 0.75M | LiNO₃ 3 wt.% |
| Example 2 | dimethoxyethane 60 vol.% | 2-methylfuran 10 vol.% | 2-methyl tetrahydrofuran 30 vol.% | LiFSI 0.75M | LiNO₃ 3 wt.% |
| Example 3 | dimethoxyethane 70 vol.% | 2-methylfuran 10 vol.% | 2-methyl tetrahydrofuran 20 vol.% | LiFSI 0.75M | LiNO₃ 3 wt.% |
| Example 4 | dimethoxyethane 50 vol.% | 2-methylfuran 20 vol.% | 2-methyl tetrahydrofuran 30 vol.% | LiFSI 0.75M | LiNO₃ 3 wt.% |
| Example 5 | dimethoxyethane 70 vol.% | 2-methylfuran 20 vol.% | 2-methyl tetrahydrofuran 10 vol.% | LiFSI 0.75M | LiNO₃ 3 wt.% |
| Example 6 | dimethoxyethane 50 vol.% | 2-methylfuran 30 vol.% | 2-methyl tetrahydrofuran 20 vol.% | LiFSI 0.75M | LiNO₃ 3 wt.% |
| Example 7 | dimethoxyethane 60 vol.% | 2-methylthiophene 10 vol.% | 2-methyl tetrahydrofuran 30 vol.% | LiFSI 0.75M | LiNO₃ 3 wt.% |
| Comparative Example 1 | dimethoxyethane 70 vol.% | - | 2-methyl tetrahydrofuran 30 vol.% | LiFSI 0.75M | LiNO₃ 3 wt.% |
| Comparative Example 2 | dimethoxyethane 70 vol.% | 2-methylfuran 30 vol.% | - | LiFSI 0.75M | LiNO₃ 3 wt.% |
| Comparative Example 3 | dimethoxyethane 80 vol.% | 2-methylfuran 10 vol.% | 2-methyl tetrahydrofuran 10 vol.% | LiFSI 0.75M | LiNO₃ 3 wt.% |
| Comparative Example 4 | dimethoxyethane 40 vol.% | 2-methylfuran 10 vol.% | 2-methyl tetrahydrofuran 50 vol.% | LiFSI 0.75M | LiNO₃ 3 wt.% |
| Comparative Example 5 | dimethoxyethane 50 vol.% | 2-methylfuran 40 vol.% | 2-methyl tetrahydrofuran 10 vol.% | LiFSI 0.75M | LiNO₃ 3 wt.% |
| Comparative Example 6 | dimethoxyethane 50 vol.% | 2-methylfuran 10 vol.% | 2-methyl tetrahydrofuran 40 vol.% | LiTFSI 0.75M | LiNO₃ 3 wt.% |

### [Experimental Example 1] Evaluation of discharging capacity of lithium secondary battery

The lithium secondary batteries (precisely, lithium-sulfur batteries) prepared in Examples 1 to 7 and Comparative Examples 1 to 6 are charged and discharged at 0.1C for 3 cycles to measure the discharging capacities at the third cycle (i.e. check of the low-temperature discharging characteristics). At that time, the range of the voltage used was set to 1.8 ~ 2.5 V (i.e. the discharging was set up to 1.8 V, and the charging was set up to 2.5 V), and the evaluation temperature was set to 10 °C.

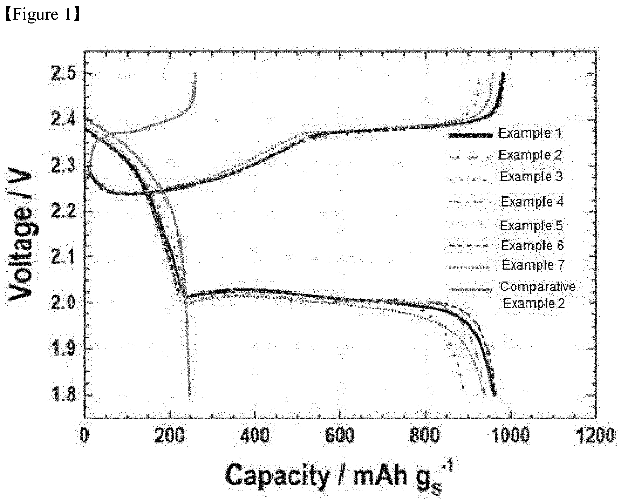

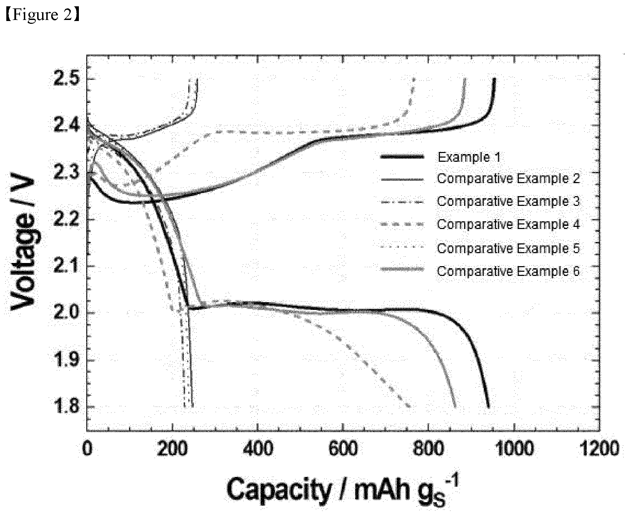

FIGs. 1 and 2 are graphs showing discharging capacities of lithium secondary batteries manufactured according to an embodiment of the present invention and a comparative example. Through FIG. 1, it was confirmed that Examples 1 to 7 using the first solvent (dimethoxyethane) in an amount of 45 to 75 vol.%, the second solvent (2-methylfuran) in an amount of 5 to 35 vol.%, and the third solvent(2-methyltetrahydrofuran) in an amount of 5 vol.% or more showed excellent discharging capacity under a low-temperature (10 °C) condition. On the other hand, it was confirmed that even though the first solvent (dimethoxyethane) and the second solvent (2-methylfuran) are used, if the third solvent (2-methyltetrahydrofuran) is not used or is used in an amount of less than 5 vol.% (Comparative Example 2), the discharging capacity at a low temperature (10 °C) was significantly decreased compared to Examples 1 to 7.

Also, through FIG.2, it was confirmed that in all cases of Comparative Example 3 using more than 75 vol.% of the first solvent (dimethoxyethane), Comparative Example 4 using less than 45 vol.% of the first solvent (dimethoxyethane), and Comparative Example 5 using more than 35 vol.% of the second solvent (2-methylfuran), the discharging capacity at a low-temperature (10 °C) condition was significantly reduced as compared to Example 1. In addition, it was confirmed that even in the case of Comparative Example 6, in which LiFSI among lithium salts was changed to LiTFSI, discharging capacity at a low-temperature (10 °C) condition was inferior to that of Example 1. This is due to an increase in cell resistance by a decrease in electrolyte ion conductivity, and thus, it was found that it is preferable not to include LiTFSI in the electrolyte solution for the lithium secondary battery of the present invention

### [Experimental Example 2] Evaluation of lifetime characteristics of lithium secondary battery

The lithium secondary batteries (exactly, lithium-sulfur batteries) prepared in Examples 1 to 7 and Comparative Examples 1 to 6 were charged and discharged at 0.2C to evaluate the lifetime cycles (i.e. check of lifetime characteristics). At that time, the range of the voltage used was set to 1.8 ~ 2.5 V (i.e. the discharging was set up to 1.8 V, and the charging was set up to 2.5 V), and the evaluation temperature was set to 25 °C.

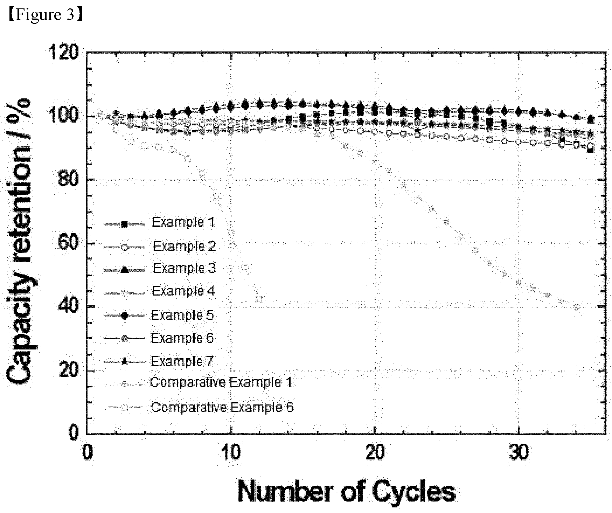

FIG. 3 is a graph showing lifetime characteristics of lithium secondary batteries manufactured according to an embodiment of the present invention and a comparative example. As shown in FIG. 3, it was confirmed that Examples 1 to 7 using the first solvent (dimethoxyethane) in an amount of 45 to 75 vol.%, the second solvent (2-methylfuran) in an amount of 5 to 35 vol.% and the third solvent(2-methyltetrahydrofuran) in an amount of 5 to 45 vol.% showed excellent lifetime characteristics at 25 °C. On the other hand, it was confirmed that even though the first solvent (dimethoxyethane) and the third solvent(2-methyltetrahydrofuran) are used, if the second solvent(2-methylfuran) is not used or is used in an amount of less than 5 vol.% (Comparative Example 1), the lifetime cycle at 25 °C was significantly reduced as compared to Examples 1 to 7.

In addition, it was confirmed that even in the case of Comparative Example 6 in which LiFSI among lithium salts was changed to LiTFSI, the lifetime cycle at 25 °C was significantly reduced as compared to Examples 1 to 7 as well as Comparative Example 1. This is due to the fact that the SEI layer (Solid Electrolyte Interphase layer) stabilizing the negative electrode cannot be formed, so that the decomposition of the electrolyte is rapidly proceeded on the surface of the negative electrode (i.e. acceleration of the depletion of the electrolyte and the negative electrode), and for this reason as well, it was found that it is preferable not to include LiTFSI in the electrolyte solution for the lithium secondary battery of the present invention.

In summary, it was confirmed that only when the first solvent comprising the glyme-based compound is used in an amount of 45 to 75 vol.%, the second solvent comprising the conjugated heterocyclic compound is used in an amount of 5 to 35 vol.%, the third solvent is used in an amount of 5 to 35 vol.%, and also the LiTFSI lithium salt is excluded, both the discharging capacity in a low-temperature environment and the lifetime characteristics in a general environment were excellent. On the other hand, it was found that if any one of the solvent components is excluded, or even if not excluded, is not within the content range specified in the present invention, or if the LiTFSI lithium salt is contained, the discharging capacity in a low-temperature environment and the lifetime characteristics in a general environment were significantly reduced.

As described above, in order to improve the battery performance in a low-temperature environment, the applicant of the present invention not only combines specific substances in relation to the composition of the electrolyte solution, but also derives a specific content of each substance that stands out in battery performance even in a low-temperature environment, and as a result, it is predicted that in the future, lithium-sulfur batteries can be used without defects even in a low-temperature environment.

## Claims

1. An electrolyte solution for a lithium secondary battery, comprising
a first solvent comprising a glyme-based compound;
a second solvent comprising a conjugated heterocyclic compound;
a third solvent comprising a non-conjugated cyclic ether-based compound; and lithium salt.

2. The electrolyte solution for the lithium secondary battery according to claim 1, wherein the content of the first solvent is 45 to 75 vol.%, the content of the second solvent is 5 to 35 vol.%, and the content of the third solvent is 5 vol.% or more, relative to the total amount of the organic solvents comprising the first solvent, the second solvent, and the third solvent.

3. The electrolyte solution for the lithium secondary battery according to claim 1, wherein the conjugated heterocyclic compound comprises any one or more of a conjugated cyclic ether-based compound and a thiophene-based compound.

4. The electrolyte solution for the lithium secondary battery according to claim 3, wherein the conjugated cyclic ether-based compound is at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, and 2-(2-nitrovinyl)furan.

5. The electrolyte solution for the lithium secondary battery according to claim 3, wherein the thiophene-based compound is at least one selected from the group consisting of thiophene, 2-methylthiophene, 2-ethylthiophene, 2-propylthiophene, 2-butylthiophene, 2,3-dimethylthiophene, 2,4-dimethylthiophene, and 2,5-dimethylthiophene.

6. The electrolyte solution for the lithium secondary battery according to claim 1, wherein the second solvent comprises a thiophene-based compound.

7. The electrolyte solution for the lithium secondary battery according to claim 1, wherein the non-conjugated cyclic ether-based compound is at least one selected from the group consisting of tetrahydrofuran, 2-methyltetrahydrofuran, 3-methyltetrahydrofuran, 2,5-dimethyltetrahydrofuran, 2-ethyl-5-methyltetrahydrofuran, and 1,3-dioxolane.

8. The electrolyte solution for the lithium secondary battery according to claim 1, wherein the lithium salt is at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, LiFSI ((SO₂F)₂NLi), (CF₃SO₂)₃CLi, lithium nitrate (LiNO₃), lithium nitrite (LiNO₂), lithium chloroborane, lithium lower aliphatic carboxylate having 4 or less carbon atoms, lithium tetraphenyl borate, and lithium imide.

9. The electrolyte solution for the lithium secondary battery according to claim 8, wherein the lithium salt comprises LiFSI and lithium nitrate.

10. The electrolyte solution for the lithium secondary battery according to claim 1, wherein the electrolyte solution for the lithium secondary battery further comprises at least one additive selected from the group consisting of lanthanum nitrate (La(NO₃)₃), potassium nitrate (KNO₃), cesium nitrate (CsNO₃), magnesium nitrate (Mg(NO₃)₂), barium nitrate (Ba(NO₃)₂), potassium nitrite (KNO₂), and cesium nitrite (CsNO₂).

11. The electrolyte solution for the lithium secondary battery according to claim 9, wherein the electrolyte solution for the lithium secondary battery comprises dimethoxyethane as the first solvent, 2-methylfuran or 2-methylthiophene as the second solvent, 2-methyltetrahydrofuran as the third solvent, and LiFSI and lithium nitrate as the lithium salt.

12. A lithium secondary battery comprising a positive electrode; a negative electrode; a separator interposed between the positive electrode and the negative electrode; and the electrolyte solution for the lithium secondary battery of any one of claims 1 to 11.

13. The lithium secondary battery according to claim 12, wherein the lithium secondary battery is a lithium-sulfur battery.

14. The lithium secondary battery according to claim 13, wherein the lithium-sulfur battery exhibits a discharging capacity retention rate of 90 to 97% at a low temperature of 15 °C or less.

15. The lithium secondary battery according to claim 14, wherein the lithium-sulfur battery exhibits a discharging capacity retention rate of 85 to 95% in the third cycle after proceeding under the charging and discharging conditions of 10 °C and 0.1C, as compared to the same conditions at 25 °C.

## Patentansprüche

1. Elektrolytlösung für eine Lithium-Sekundärbatterie, umfassend
ein erstes Lösungsmittel, das eine Verbindung auf Glymin-Basis umfasst;
ein zweites Lösungsmittel, das eine konjugierte heterocyclische Verbindung umfasst;
ein drittes Lösungsmittel, das eine nicht konjugierte Verbindung auf Basis eines cyclischen Ethers umfasst; und
Lithiumsalz.

2. Elektrolytlösung für die Lithium-Sekundärbatterie gemäß Anspruch 1, wobei der Gehalt des ersten Lösungsmittels 45 bis 75 Vol.-% beträgt, der Gehalt des zweiten Lösungsmittels 5 bis 35 Vol.-% beträgt und der Gehalt des dritten Lösungsmittels 5 Vol.-% oder mehr beträgt, bezogen auf die Gesamtmenge der organischen Lösungsmittel, die das erste Lösungsmittel, das zweite Lösungsmittel und das dritte Lösungsmittel umfassen.

3. Elektrolytlösung für die Lithium-Sekundärbatterie gemäß Anspruch 1, wobei die konjugierte heterocyclische Verbindung eines oder mehrere umfasst aus einer konjugierten Verbindung auf Basis eines cyclischen Ethers und einer Verbindung auf Thiophen-Basis.

4. Elektrolytlösung für die Lithium-Sekundärbatterie gemäß Anspruch 3, wobei die konjugierte Verbindung auf Basis eines cyclischen Ethers mindestens eine ist, die ausgewählt ist aus der Gruppe bestehend aus Furan, 2-Methylfuran, 3-Methylfuran, 2-Ethylfuran, 2-Propylfuran, 2-Butylfuran, 2,3-Dimethylfuran, 2,4-Dimethylfuran, 2,5-Dimethylfuran, Pyran, 2-Methylpyran, 3-Methylpyran, 4-Methylpyran, Benzofuran und 2-(2-Nitrovinyl)furan.

5. Elektrolytlösung für die Lithium-Sekundärbatterie gemäß Anspruch 3, wobei die Verbindung auf Thiophen-Basis mindestens eine ist, die ausgewählt ist aus der Gruppe bestehend aus Thiophen, 2-Methylthiophen, 2-Ethylthiophen, 2-Propylthiophen, 2-Butylthiophen, 2,3-Dimethylthiophen, 2,4-Dimethylthiophen und 2,5-Dimethylthiophen.

6. Elektrolytlösung für die Lithium-Sekundärbatterie gemäß Anspruch 1, wobei das zweite Lösungsmittel eine Verbindung auf Thiophen-Basis umfasst.

7. Elektrolytlösung für die Lithium-Sekundärbatterie gemäß Anspruch 1, wobei die nicht konjugierte Verbindung auf Basis eines cyclischen Ethers mindestens eine ist, die ausgewählt ist aus der Gruppe bestehend aus Tetrahydrofuran, 2-Methyltetrahydrofuran, 3-Methyltetrahydrofuran, 2,5-Dimethyltetrahydrofuran, 2-Ethyl-5-methyltetrahydrofuran und 1,3-Dioxolan.

8. Elektrolytlösung für die Lithium-Sekundärbatterie gemäß Anspruch 1, wobei das Lithiumsalz mindestens eines ist, das ausgewählt ist aus der Gruppe bestehend aus LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (C₂F₅SO₂)₂NLi, LiFSI ((SO₂F)₂NLi), (CF₃SO₂)₃CLi, Lithiumnitrat (LiNO₃), Lithiumnitrit (LiNO₂), Lithiumchlorboran, Lithiumsalz einer niederen aliphatischen Carbonsäure mit 4 oder weniger Kohlenstoffatomen, Lithiumtetraphenylborat und Lithiumimid.

9. Elektrolytlösung für die Lithium-Sekundärbatterie gemäß Anspruch 8, wobei das Lithiumsalz LiFSI und Lithiumnitrat umfasst.

10. Elektrolytlösung für die Lithium-Sekundärbatterie gemäß Anspruch 1, wobei die Elektrolytlösung für die Lithium-Sekundärbatterie ferner mindestens ein Additiv umfasst, das ausgewählt ist aus der Gruppe bestehend aus Lanthannitrat (La(NO₃)₃), Kaliumnitrat (KNO₃), Cäsiumnitrat (CsNO₃), Magnesiumnitrat (Mg(NO₃)₂), Bariumnitrat (Ba(NO₃)₂), Kaliumnitrit (KNO₂) und Cäsiumnitrit (CsNO₂).

11. Elektrolytlösung für die Lithium-Sekundärbatterie gemäß Anspruch 9, wobei die Elektrolytlösung für die Lithium-Sekundärbatterie Dimethoxyethan als erstes Lösungsmittel, 2-Methylfuran oder 2-Methylthiophen als zweites Lösungsmittel, 2-Methyltetrahydrofuran als drittes Lösungsmittel und LiFSI und Lithiumnitrat als Lithiumsalz umfasst.

12. Lithium-Sekundärbatterie, umfassend eine positive Elektrode, eine negative Elektrode, einen zwischen der positiven Elektrode und der negativen Elektrode angeordneten Separator und die Elektrolytlösung für die Lithium-Sekundärbatterie gemäß mindestens einem der Ansprüche 1 bis 11.

13. Lithium-Sekundärbatterie gemäß Anspruch 12, wobei die Lithium-Sekundärbatterie eine Lithium-Schwefel-Batterie ist.

14. Lithium-Sekundärbatterie gemäß Anspruch 13, wobei die Lithium-Schwefel-Batterie bei einer niedrigen Temperatur von 15 °C oder weniger eine Entladekapazitätserhaltungsrate von 90 bis 97 % aufweist.

15. Lithium-Sekundärbatterie gemäß Anspruch 14, wobei die Lithium-Schwefel-Batterie im dritten Zyklus nach dem Durchlaufen der Lade- und Entladebedingungen bei 10 °C und 0,1 C eine Entladekapazitätserhaltungsrate von 85 bis 95 % aufweist im Vergleich zu den gleichen Bedingungen bei 25 °C.

## Revendications

1. Solution électrolytique pour une batterie secondaire au lithium, comprenant
un premier solvant comprenant un composé à base de glyme ;
un deuxième solvant comprenant un composé hétérocyclique conjugué ;
un troisième solvant comprenant un composé à base d'éther cyclique non conjugué ; et
un sel de lithium.

2. Solution électrolytique pour batterie secondaire au lithium selon la revendication 1, dans laquelle la teneur en premier solvant est comprise de 45 à 75 % en volume, la teneur en deuxième solvant est comprise de 5 à 35 % en volume et la teneur en troisième solvant est supérieure ou égale à 5 % en volume, par rapport à la quantité totale de solvants organiques comprenant le premier solvant, le deuxième solvant et le troisième solvant.

3. Solution électrolytique pour batterie secondaire au lithium selon la revendication 1, dans laquelle le composé hétérocyclique conjugué comprend un quelconque ou plusieurs composés parmi un composé à base d'éther cyclique conjugué et un composé à base de thiophène.

4. Solution électrolytique pour batterie secondaire au lithium selon la revendication 3, dans laquelle le composé à base d'éther cyclique conjugué est au moins un composé choisi dans le groupe consistant en furane, 2-méthylfurane, 3-méthylfurane, 2-éthylfurane, 2-propylfurane, 2-butylfurane, 2,3-diméthylfurane, 2,4-diméthylfurane, 2,5-diméthylfurane, pyrane, 2-méthylpyrane, 3-méthylpyrane, 4-méthylpyrane, benzofurane et 2-(2-nitrovinyl)furane.

5. Solution électrolytique pour batterie secondaire au lithium selon la revendication 3, dans laquelle le composé à base de thiophène est au moins un composé choisi dans le groupe consistant en thiophène, 2-méthylthiophène, 2-éthylthiophène, 2-propylthiophène, 2-butylthiophène, 2,3-diméthylthiophène, 2,4-diméthylthiophène et 2,5-diméthylthiophène.

6. Solution électrolytique pour batterie secondaire au lithium selon la revendication 1, dans laquelle le deuxième solvant comprend un composé à base de thiophène.

7. Solution électrolytique pour batterie secondaire au lithium selon la revendication 1, dans laquelle le composé à base d'éther cyclique non conjugué est au moins un composé choisi dans le groupe consistant en tétrahydrofurane, 2-méthyltétrahydrofurane, 3-méthyltétrahydrofurane, 2,5-diméthyltétrahydrofurane, 2-éthyl-5-méthyltétrahydrofurane et 1,3-dioxolane.

8. Solution électrolytique pour batterie secondaire au lithium selon la revendication 1, dans laquelle le sel de lithium est au moins un sel choisi dans le groupe consistant en LiCl, LiBr, Lil, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl4, CH₃SO₃Li, CF₃SO₃Li, (C₂F₅SO₂)₂NLi, LiFSI ((SO₂F)₂NLi), (CF₃SO₂)₃CLi, nitrate de lithium (LiNO₃), nitrite de lithium (LiNO₂), chloroborane de lithium, carboxylate aliphatique inférieur de lithium présentant 4 atomes de carbone ou moins, borate de tétraphényle de lithium et imide de lithium.

9. Solution électrolytique pour batterie secondaire au lithium selon la revendication 8, dans laquelle le sel de lithium comprend du LiFSI et du nitrate de lithium.

10. Solution électrolytique pour batterie secondaire au lithium selon la revendication 1, dans laquelle la solution électrolytique pour batterie secondaire au lithium comprend en outre au moins un additif choisi dans le groupe consistant en nitrate de lanthane (La(NO₃)₃), nitrate de potassium (KNO₃), nitrate de césium (CsNO₃), nitrate de magnésium (Mg(NO₃)₂), nitrate de baryum (Ba(NO₃)₂), nitrite de potassium (KNO₂) et nitrite de césium (CsNO₂).

11. Solution électrolytique pour batterie secondaire au lithium selon la revendication 9, dans laquelle la solution électrolytique pour batterie secondaire au lithium comprend du diméthoxyéthane comme premier solvant, du 2-méthylfurane ou du 2-méthylthiophène comme deuxième solvant, du 2-méthyltétrahydrofurane comme troisième solvant, et du LiFSI et du nitrate de lithium comme sel de lithium.

12. Batterie secondaire au lithium comprenant une électrode positive ; une électrode négative ; un séparateur interposé entre l'électrode positive et l'électrode négative ; et la solution électrolytique pour batterie secondaire au lithium selon l'une quelconque des revendications 1 à 11.

13. Batterie secondaire au lithium selon la revendication 12, dans laquelle la batterie secondaire au lithium est une batterie au lithium-soufre.

14. Batterie secondaire au lithium selon la revendication 13, dans laquelle la batterie au lithium-soufre présente un taux de rétention de capacité de décharge de 90 à 97 % à basse température inférieure ou égale à 15 °C.

15. Batterie secondaire au lithium selon la revendication 14, dans laquelle la batterie au lithium-soufre présente un taux de rétention de capacité de décharge de 85 à 95 % dans le troisième cycle après une procédure dans des conditions de charge et de décharge de 10 °C et 0,1C, par rapport aux mêmes conditions à 25 °C.
